Europäisches Patentamt

European Patent Office

Office européen des brevets

(11) Veröffentlichungsnummer: **0 487 882 A1**

## (12) EUROPÄISCHE PATENTANMELDUNG

(21) Anmeldenummer: **91117552.9**

(22) Anmeldetag: **15.10.91**

(30) Priorität: **26.10.90 DE 4034104**

(43) Veröffentlichungstag der Anmeldung:
**03.06.92 Patentblatt 92/23**

(84) Benannte Vertragsstaaten:
**AT CH DE FR GB IT LI NL**

(51) Int. Cl.⁵: **F16J 15/34**

(71) Anmelder: **KSB Aktiengesellschaft
Johann-Klein-Strasse 9
W-6710 Frankenthal(DE)**

(72) Erfinder: **Kussmann, Wolfgang
Trifelsstrasse 29
W-6701 Altrip(DE)**

(54) **Gleitringdichtung.**

㉟ Eine Gleitringdichtung (4-5), ist mit mehreren Kanälen (7) versehen, die aufgrund eines zum Umfang gerichteten Verlaufs eine den Gleitflächenbereich erfassende Förderung einer der Funktion der Gleitringdichtung dienenden Flüssigkeit bewirken.

Um beide Gleitringe (4-5) und deren Gleitflächenbereich in den Strom der von der Gleitringdichtung geförderten Flüssigkeit einzubeziehen, sieht die Erfindung vor, daß der im Gehäuse (2) angeordnete Gleitring (5) mit mehreren Kanälen (8) ausgestattet ist, über welche die vom umlaufenden Gleitring (4) geförderte Flüssigkeit geführt wird zum Schmierung, Sperrung oder Kühlung.

Die Erfindung betrifft eine Gleitringdichtung gemäß dem Oberbegriff des Patentanspruches.

Durch die DE-C-1 222 332 ist es bekannt, bei einer Gleitringdichtung, deren Gleitfläche durch eine Ringnut in zwei konzentrische Teile aufgegliedert ist, Sperrflüssigkeit über Bohrungen zuzuführen, die im gehäuseseitig angeordneten Gleitring vorgesehen sind und die in die Ringnut münden. Der für die Zuführung der Sperrflüssigkeit notwendige Druck wird hierbei außerhalb des die abzudichtende Welle und die Gleitringdichtung enthaltenden Gehäuses erzeugt.

Es ist auch bereits bekannt, das für die Funktion einer Gleitringdichtung notwendige Kühl- oder Schmiermittel durch eine im Gehäuse angeordnete, von der Welle angetriebene Schraubengangpumpe umzuwälzen. Die DE-C-1 913 397 kann hierfür als Beispiel dienen. Dort liegen allerdings die Gleitflächen der Gleitringdichtung nicht im unmittelbaren Bereich des Schmier- und Kühlmittelumlaufs.

Durch die DE-C-1 294 122 ist es bekannt, den mit der Welle umlaufenden Gleitring mit mehreren Kanälen zu versehen, die einen im wesentlichen radialen Verlauf besitzen und somit eine das Strömungsmittel erfassende Pumpwirkung ausüben. Mit Hilfe dieser Pumpwirkung wird das Strömungsmittel zu den Gleitflächen gefördert, wobei allerdings nur der von Radialnuten, in welche die Förderkanäle münden, überstrichene radial äußere Bereich der Gleitflächen vom unmittelbaren Förderstrom erfaßt wird. Vor allem ist der gehäuseseitige Gleitring nur mit einem Randbereich in den auch der Kühlung dienenden Strom einbezogen.

Durch die DE-C-22 28 081 schließlich ist es bekannt, die in einem Gleitring angeordneten Förderbohrungen zur Kühlung eines Gleitringes zu nutzen. Zu diesem Zweck ist zwischen dem Gleitring und der ihn tragenden Welle eine den Förderkanälen vorgeschaltete Ringnut vorgesehen, die einen ständigen, auf der Innenseite des Gleitringes verlaufenden Kühlstrom zur Folge hat. Allerdings führt auch dieser Strom nicht unmittelbar in den Gleitflächenbereich. Außerdem wird hier ebenfalls der gehäuseseitige Gleitring nicht in den Kühlstrom einbezogen.

Der Erfindung liegt die Aufgabe zugrunde, eine dem Oberbegriff des Patentanspruches entsprechende Gleitringdichtung zu schaffen,bei welcher beide Gleitringe und deren Gleitflächenbereich gleichermaßen in den unmittelbaren Förderstrom der der Funktion der Gleitringdichtung dienenden Flüssigkeit einbezogen sind.

Erfindungsgemäß wird diese Aufgabe dadurch gelöst, daß der im Gehäuse angeordnete Gleitring mit mehreren Kanälen ausgestattet ist, über welche die vom umlaufenden Gleitring geförderte Flüssigkeit geführt wird.

Im Gegensatz zu den vorbekannten Fördereinrichtungen, bei denen lediglich der von der Rückseite des umlaufenden Gleitringes kommende Förderstrom gegen die Gleitfläche des stehenden Gleitringes geleitet wird, werden hier beide Gleitringe in den Förderstrom einbezogen. Der Förderstrom kann dabei so geführt sein, daß er zunächst zum umlaufenden Gleitring gelangt, um von dort über die im stehenden Gleitring verlaufenden Kanäle an den Ausgangspunkt, der beispielsweise ein außerhalb des Gehäuses liegender Vorratsbehälter sein kann, zurückgepumpt zu werden.

Eine besonders vorteilhafte Lösung ergibt sich, wenn die im gehäuseseitigen Gleitring angeordneten Kanäle der Zuführung der Flüssigkeit in einen zwischen den beiden Gleitringen ausgesparten Ringraum dienen, wobei die Förderwirkung der im umlaufenden Gleitring angeordneten Kanäle vom Gleitflächenbereich weg gerichtet ist.

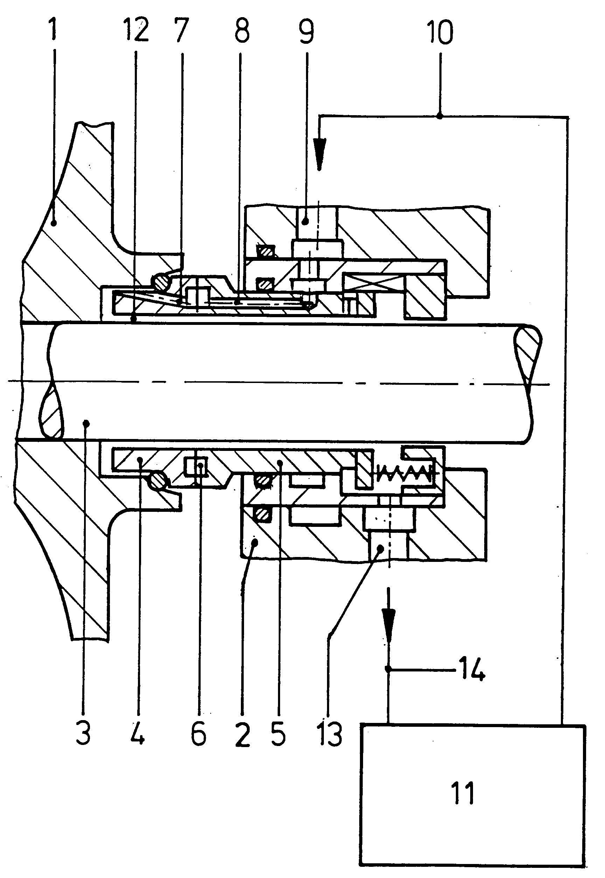

Anhand eines Ausführungsbeispiels wird die Erfindung näher erläutert. Die Zeichnung zeigt einen Schnitt durch eine eine erfindungsgemäße Gleitringdichtung enthaltende Kreiselpumpe.

Die zur Abdichtung einer ein Kreiselpumpenlaufrad (1) tragenden, in einem Gehäuse (2) angeordneten Welle (3) dienende Gleitringdichtung wird im wesentlichen gebildet durch einen mit der Welle (3) umlaufenden Gleitring (4) und einen drehfest, verschieblich im Gehäuse (2) angeordneten Gleitring (5).

Zwischen den beiden Gleitringen (4, 5) wird ein im Gleitflächenbereich befindlicher Ringraum (6) gebildet. Beide Gleitringe (4, 5) besitzen jeweils mehrere, über den Umfang verteilte Kanäle (7, 8). Die im Gleitring (5) angeordneten Kanäle (8) haben einen im wesentlichen achsparallelen Verlauf, sie stehen über eine im Gehäuse (2) verlaufende Bohrung (9) und eine - hier schematisch dargestellt - Rohrleitung (10) mit einem Vorratsbehälter (11) in Verbindung.

Die Kanäle (7) im umlaufenden Gleitring (4) haben einen im wesentlichen radialen Verlauf, so daß sie eine Förderwirkung auf die der Funktion der Gleitringdichtung dienende Flüssigkeit ausüben. Hinter der Gleitringdichtung (4) gelangt diese Flüssigkeit in einen zwischen den Gleitringen (4, 5) und der Welle (3) gebildeten Ringspalt (12), von wo sie über eine im Gehäuse (2) verlaufende Bohrung (13) und eine Rohrleitung (14) zum Vorratsbehälter (11) zurückgeführt wird.

Im Gegensatz zur dargestellten Ausführung kann die Förderung auch in umgekehrter Richtung verlaufen. Hierzu müßte allerdings auch der Verlauf der Kanäle (7) umgekehrt sein, so daß diese vom Ringspalt (12) über den Ringraum (6) in die Kanäle (8) des stehenden Gleitrings (5) fördern.

Die im Kreislauf geführte Flüssigkeit kann als Sperrflüssigkeit dienen, sie kann aber auch zur Schmierung der Gleitflächen eingesetzt werden, sie ist im übrigen geeignet, die Gleitringdichtung und deren Umgebung zu spülen und die in diesem Bereich entstehende Wärme abzuführen.

Der Vorratsbehälter (11) kann in den Lagerbock der durch die Gleitringdichtung abzudichtenden Kreiselpumpe integriert sein, wo er oder sein Inhalt bei Bedarf ohne weiteres entsorgt werden kann.

**Patentansprüche**

1. Gleitringdichtung zur Abdichtung einer in einem Gehäuse (2) umlaufenden Welle (3), bestehend aus einem im Gehäuse (2) angeordneten, gegen Drehung gesicherten Gleitring (5) und einem mit der Welle (3) umlaufenden Gleitring (4), welcher mit mehreren Kanälen (7) versehen ist, die aufgrund eines zum Umfang gerichteten Verlaufs eine den Gleitflächenbereich erfassende Förderung einer der Funktion der Gleitringdichtung dienenden Flüssigkeit bewirken, **dadurch gekennzeichnet,** daß der im Gehäuse (2) angeordnete Gleitring (5) mit mehreren Kanälen (8) ausgestattet ist, über welche die vom umlaufenden Gleitring (4) geförderte Flüssigkeit geführt wird.

2. Gleitringdichtung nach Anspruch 1, dadurch gekennzeichnet, daß die im gehäuseseitigen Gleitring (5) angeordneten Kanäle (8) der Zuführung der Flüssigkeit in einen zwischen den beiden Gleitringen (4, 5) ausgesparten Ringraum (6) dienen, wobei die Förderwirkung der im umlaufenden Gleitring (4) angeordneten Kanäle (7) vom Gleitflächenbereich weg gerichtet sind.

Europäisches
Patentamt

**EUROPÄISCHER RECHERCHENBERICHT**

Nummer der Anmeldung

EP 91 11 7552

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 860 895  (MOSBACHER)<br>* Spalte 5, Zeile 28 - Spalte 7, Zeile 73; Figuren 5-8 *<br>--- | 1-2 | F 16 J   15/34 |
| Y | DE-A-2 818 664  (FLUITEN)<br>* Ganzes Dokument *<br>--- | 1-2 | |
| A | US-A-4 749 199  (GRESH)<br>* Spalte 4, Zeilen 18-62; Figur 2 *<br>--- | 1 | |
| A | FR-A-2 026 355  (BRANDT)<br>* Ganzes Dokument *<br>----- | 1 | |

**RECHERCHIERTE SACHGEBIETE (Int. Cl.5)**

F 16 J

Der vorliegende Recherchenbericht wurde für alle Patentansprüche erstellt

| Recherchenort | Abschlußdatum der Recherche | Prüfer |
|---|---|---|
| DEN HAAG | 06-02-1992 | LEGER M.G.M. |